# FASCICULE DE BREVET EUROPEEN

(11) **EP 3 063 226 B1**
(45) Date de publication et mention de la délivrance du brevet: **09.08.2017**
(21) Numéro de dépôt: 14789848.0
(22) Date de dépôt: 28.10.2014
(51) Int. Cl.: C08L 77/00, F16J 12/00, F17C 1/04, F17C 1/12, F17C 1/16

(54) **MATÉRIAU ET DISPOSITIF POUR LE CONFINEMENT DE LIQUIDES CRYOGÉNIQUES**
MATERIAL UND VORRICHTUNG ZUR AUFFANGUNG KRYOGENER FLÜSSIGKEITEN
MATERIAL AND DEVICE FOR THE CONTAINMENT OF CRYOGENIC LIQUIDS

(30) Priorité: 29.10.2013 FR 1360537
(43) Date de publication de la demande: 07.09.2016
(73) Titulaire: Airbus Safran Launchers SAS, 75015 Paris (FR); Institut National Des Sciences Appliquees, 69621 Villeurbanne Cedex (FR); Insavalor, 69100 Villeurbanne (FR)
(72) Inventeur: L'INTERMY, Julien, F-62152 NEUFCHATEL HARDELOT (FR); DEFOORT, Brigitte, F-33160 Saint Medard En Jalles (FR); DUCHET-RUMEAU, Jannick, F-01600 Sainte Euphemie (FR); GERARD, Jean-François, F-69500 Bron (FR)
(74) Mandataire: Brevalex
(86) Numéro de dépôt international: PCT/EP2014/073142
(87) Numéro de publication internationale: WO 2015/063101

(56) Documents cités:
- EP-A1- 1 258 669
- WO-A1-2008/068303
- WO-A1-2010/106017
- FR-A5- 2 075 371
- KOOJI, ET AL.: "A full composite lox fuel tank for a hybrid rocket", PROCEEDINGS OF THE EUROPEAN CONFERENCE ON SPACECRAFT STRUCTURES, MATERIALS AND MECHANICAL TESTING, 1 décembre 2000 (2000-12-01), pages 187-192, XP002727798, Noordwijk, Pays-Bas cité dans la demande

## Description

### DOMAINE TECHNIQUE

L'invention se rapporte au domaine du confinement de liquides cryogéniques, c'est-à-dire de gaz liquéfiés qui sont conservés et/ou utilisés à des températures allant de -150°C au zéro degré absolu (-273,15°C). Il s'agit typiquement de l'azote, de l'hélium, du néon, de l'argon, du krypton, de l'hydrogène, du méthane, de l'oxygène et du gaz naturel.

Plus spécifiquement, l'invention se rapporte à l'utilisation d'un matériau composite particulier pour la fabrication d'un dispositif de confinement d'un liquide cryogénique.

Elle se rapporte également à un dispositif de confinement d'un liquide cryogénique qui comprend au moins une couche en ce matériau composite.

L'invention trouve application dans la fabrication de réservoirs cryogéniques et, notamment, de réservoirs d'oxygène liquide, en particulier pour un lanceur spatial.

Toutefois, elle peut également trouver application dans la fabrication de lignes d'alimentation de liquides cryogéniques et, en particulier, d'oxygène liquide ainsi que dans la fabrication de tout dispositif permettant le stockage, le transport et/ou la fourniture d'un gaz sous pression.

### ÉTAT DE LA TECHNIQUE ANTÉRIEURE

Les réservoirs cryogéniques et, en particulier, les réservoirs d'oxygène liquide que l'on utilise dans les lanceurs spatiaux sont traditionnellement réalisés en alliages métalliques.

Or, les alliages métalliques, qui sont utilisés pour réaliser ces réservoirs, présentent un certain nombre d'inconvénients dont notamment une densité élevée (qui constitue donc un frein à une réduction de la masse des lanceurs spatiaux), une disponibilité commerciale plutôt médiocre (avec de longs délais d'approvisionnement et un faible choix de références), des coûts élevés et ce, d'autant plus, que les pertes de matière par usinage peuvent être importantes (jusqu'à 80%).

L'utilisation de matériaux composites devrait permettre de s'affranchir de ces inconvénients dans la mesure où les matériaux composites sont généralement moins denses, moins coûteux et plus simples à travailler que les alliages métalliques.

Globalement, deux stratégies sont envisagées dans la conception de réservoirs cryogéniques à partir de matériaux composites. La première consiste à réaliser ces réservoirs en superposant plusieurs couches de matériaux différents dont une couche interne appelée « *liner* », qui a essentiellement pour fonction d'assurer une étanchéité au liquide cryogénique, une couche intermédiaire, qui a essentiellement une fonction structurale (c'est-à-dire, en pratique, de résistance mécanique), et une couche externe qui a essentiellement une fonction d'isolation thermique. La seconde consiste à réaliser des réservoirs sans liner, auquel cas l'épaisseur de la paroi de ces réservoirs doit être telle qu'elle puisse à la fois remplir les fonctions structurales et d'étanchéité.

Dans le cas où le réservoir cryogénique est un réservoir d'oxygène liquide, il est impératif que le matériau constituant la partie du réservoir, qui est destinée à être en contact avec l'oxygène liquide, soit compatible avec ce dernier. Cette compatibilité signifie que, même en cas d'apport d'énergie, le matériau ne risque pas de générer une réaction violente et ce, en dépit du caractère fortement oxydant de l'oxygène. La compatibilité d'un matériau avec l'oxygène liquide, qui est plus simplement dénommée « *compatibilité LOX* », se détermine grâce à des essais normalisés et, en particulier, selon les essais de la norme ASTM D2512 (« *Standard Test Method for Compatibility of Materials with Liquid Oxygen (Impact Sensitivity Treshold and Pass-Fail Techniques) »).*

Or, il est bien connu que les polymères ont généralement tendance à réagir en milieu oxydant avec l'apport d'une source d'énergie.

Pour réaliser le liner de réservoirs d'oxygène liquide, il a été proposé d'utiliser un fluoropolymère thermoplastique, en l'espèce un poly(éthylène-co-tétrafluoroéthylène) ou ETFE (Kooij et al., Proceedings of the European Conference on Spacecrafts Structures, Materials and Mechanical Testing, 29 novembre - 1er décembre 2000, Noordwijk, Pays-Bas, pp. 187-192, référence **[1]**; Baker et al., International Conference on Green Propellant for Space Propulsion, Juin 2001, Noordwijk, Pays-Bas, pp. 327-334, référence **[2]**). Malheureusement, ce fluoropolymère est perméable à l'oxygène et à l'hélium, ce qui rend son utilisation peu adaptée à la réalisation d'un liner pour réservoirs d'oxygène liquide qui, par définition, se doit d'être étanche à l'oxygène liquide et très faiblement perméable à l'hélium qui sert de gaz de pressurisation. De plus, sa mise en oeuvre n'est pas dénuée de risques en termes d'hygiène et de sécurité (H&S).

Il a également été proposé d'utiliser des matériaux composites à matrice époxyde ou polyuréthane, renforcée par des nanocharges du type montmorillonite ou hydrotalcite (Scatteia et al., Proceedings of the 54th International Astronautical Congress of the International Astronautical Federation, Octobre 2003, Brême, Allemagne, pp. 1630-1642, référence **[3]** ; Scatteia et al., 13th AIAA/CIRA International Space Planes and Hypersonic Systems and Technologies Conference, Mai 2005, Capoue, Italie, pp. 2055-2062, référence **[4]**). Toutefois, rien n'est dit dans ces publications sur la compatibilité LOX selon la norme ASTM D2512 des matériaux proposés.

Par ailleurs, pour réaliser des réservoirs d'oxygène liquide sans liner, il a été proposé d'utiliser, d'une part, des matériaux composites à matrice époxyde renforcée par du graphite (Robinson et al., 42th AIAA/ASME/ASCE/AHS/ASC Structures, Structural Dynamics and Materials Conference and Exhibit, Avril 2001, Seattle, USA, pp. 285-295, référence **[5]**), et, d'autre part, des matériaux composites à matrice époxyde ou cyanate ester renforcée par des fibres de carbone (Scatteia et al., références **[3]** et **[4]** précitées). Toutefois, là également, la compatibilité LOX selon la norme ASTM D2512 de ces matériaux n'a pas été démontrée.

De plus, la comptabilité avec l'oxygène liquide selon la norme ASTM D2512 n'est pas le seul critère auquel doit satisfaire un matériau pour pouvoir être utilisé dans la fabrication de réservoirs d'oxygène liquide destiné à des lanceurs spatiaux. En effet, il convient que, comme précédemment mentionné, le matériau soit également étanche à l'oxygène liquide et très faiblement perméable aux gaz et, en particulier, à l'hélium.

Il convient aussi qu'il présente une densité la plus faible possible pour que les objectifs en matière de réduction de la masse des lanceurs spatiaux puissent être atteints et, dans le cas où le matériau est destiné à remplir une fonction structurale, qu'il ait des propriétés mécaniques propres à lui permettre à remplir cette fonction.

Enfin, il est souhaitable qu'il soit relativement peu coûteux, simple à fabriquer et qu'il puisse être transformé sans risque H&S particulier, notamment en pièces volumineuses (c'est-à-dire pouvant renfermer de 3 à 5 m³ d'oxygène liquide) et ce, par des techniques conventionnelles du domaine de la plasturgie telles que le rotomoulage.

L'invention a justement pour objet de fournir un matériau composite qui satisfait à tous ces critères et qui est donc apte à être utilisé pour le confinement de l'oxygène liquide, notamment dans un lanceur spatial.

Il va de soi que, dans la mesure où ce matériau répond aux contraintes très élevées, propres au confinement de l'oxygène liquide dans le domaine spatial, il est également susceptible de convenir pour confiner de l'oxygène liquide dans des applications moins contraignantes ou pour confiner des liquides cryogéniques autres que l'oxygène liquide.

### EXPOSÉ DE L'INVENTION

L'invention a donc, en premier lieu, pour objet l'utilisation d'un matériau composite pour la fabrication d'un dispositif de confinement d'un liquide cryogénique, dans laquelle le matériau composite est obtenu à partir d'une composition comprenant, en pourcentages massiques rapportés à la masse totale de la composition :
- de 60% à 90% d'un polyamide choisi parmi les polyamides 6, 6.6 et 6/6.6 et leurs mélanges ;
- de 10% à 30% d'un graphite synthétique primaire se présentant sous la forme de particules ; et
- de 0% à 10% d'un agent antioxydant.

Dans ce qui précède et ce qui suit, on entend par « *graphite synthétique primaire* », un graphite qui est obtenu par voie de synthèse mais qui n'est soumis à aucun traitement particulier à l'issue de cette synthèse, par opposition à un graphite synthétique oxydé, qui est obtenu en introduisant un graphite synthétique primaire dans une solution très oxydante (composée typiquement de permanganate de potassium et d'acide sulfurique), ce qui a pour effet de le rendre plus polaire que le graphite synthétique primaire, ou à un graphite synthétique exfolié, qui est obtenu en soumettant un graphite synthétique oxydé à un traitement thermique, ce qui a pour effet de lui conférer une densité apparente très inférieure à celle que présente le graphite synthétique primaire.

Des particules de graphite synthétique primaire sont, notamment, disponibles auprès de la société TIMCAL.

Par ailleurs, dans ce qui précède et ce qui suit, on entend par « *agent antioxydant* », tout composé capable d'inhiber l'oxydation d'un polyamide et ce, quels que soient, d'une part, l'origine de cette oxydation (traitement thermique au contact de l'air, action de la lumière UV, etc) et, d'autre part, le mécanisme de cette inhibition (inhibition radicalaire, inhibition d'hydroperoxydes, etc).

Conformément à l'invention, le polyamide est, de préférence, un polyamide 6 tel que celui qui est commercialisé par la société SOLVAY sous la référence Technyl™ S27 BL, ce type de polyamide se prêtant particulièrement bien à une transformation du matériau composite par rotomoulage.

Par ailleurs, le graphite synthétique primaire est, de préférence, un graphite synthétique primaire qui présente au moins l'une des caractéristiques suivantes :
(1) 50% en volume des particules (d50) de ce graphite ont une taille (le terme « *taille* » étant ici synonyme de « *plus grande dimension* ») au plus égale à 25 µm et 90% en volume des particules (d90) ont une taille au plus égale à 65 µm ;
(2) une surface spécifique (telle que déterminée par la méthode BET) comprise entre 5 et 8 m²/g et, mieux encore, entre 6 et 7 m²/g;
(3) une teneur massique en carbone au moins égale à 99,9%.

Avantageusement, le graphite synthétique primaire présente deux des caractéristiques (1), (2) et (3) précitées et, mieux encore, ces trois caractéristiques à la fois.

Un tel graphite est, par exemple, le graphite qui est commercialisé par la société TIMCAL sous la référence Timrex™ KS75 et qui présente un d90 compris entre 48 et 65 µm, une surface spécifique BET de 6,5 m²/g et une teneur massique en carbone supérieure à 99,9%.

Conformément à l'invention, le matériau composite comprend, de préférence, un agent antioxydant, ce qui signifie que le pourcentage massique de cet agent dans la composition est différent de 0%.

L'agent antioxydant peut être choisi parmi tous les composés dont l'utilisation a été proposée pour prévenir ou ralentir l'oxydation d'un polyamide. À cet égard, le lecteur pourra se référer à la monographie « Stabilisation des Plastiques : Principes Généraux », in Techniques de l'Ingénieur, Traité Plastiques et Composites, AM 3 232, pp. 1-14, référence **[6].**

Toutefois, dans le cadre de l'invention, on préfère que l'agent antioxydant soit un stabilisant thermique, c'est-à-dire un composé capable d'inhiber l'oxydation à chaud d'un polyamide. En effet, non seulement la présence d'un stabilisant thermique dans la composition permet de stabiliser cette composition lors de la fabrication du matériau composite, par exemple par extrusion, mais elle permet de plus de stabiliser le matériau composite lui-même lors de sa transformation ultérieure si cette transformation est réalisée par une technique comprenant un traitement thermique du matériau composite, ce qui sera notamment le cas d'une transformation par rotomoulage.

À titre d'exemples de stabilisants thermiques susceptibles de convenir, on peut citer les iodures minéraux tels que l'iodure de cuivre et l'iodure de potassium, les composés phénoliques tels que ceux qui sont commercialisés par la société BASF sous les références Irganox™ 245, Irganox™ 1010, Irganox™ 1098 et Irganox™ MD 1024, ou tel que celui qui est commercialisé par la société ADDIVANT sous la référence Lowinox™ 44B25, les phosphites tels que celui qui est commercialisé par la société BASF sous la référence Irgafos™ 168, et les stabilisants de type amines tels que ceux qui sont commercialisés par la société CHEMTURA sous la référence Naugard™ 445 et par la société BASF sous la référence Tinuvin™ 770.

On peut bien évidemment envisager un mélange de deux ou plus de ces stabilisants thermiques.

Conformément à l'invention, le stabilisant thermique est, de préférence, un composé phénolique et, mieux encore, un composé phénolique à encombrement stérique tel que l'Irganox™ 1098.

Par ailleurs, ce composé phénolique est avantageusement présent dans la composition à un pourcentage massique de 5 ± 2% rapporté à la masse totale du matériau.

En fonction de l'usage auquel est destiné le dispositif de confinement du liquide cryogénique et/ou de la fonction que le matériau composite est destiné à remplir dans ce dispositif (fonction d'étanchéité, fonction structurale, etc), la composition peut comprendre de plus un ou plusieurs adjuvants du type plastifiants, colorants et/ou pigments, charges antistatiques, modifiants choc, ignifugeants, etc.

Selon une disposition particulièrement préférée de l'invention, la composition comprend, en pourcentages massiques rapportés à la masse totale de la composition :
- 75 ± 2% d'un polyamide 6 ;
- 20 ± 2% du graphite synthétique primaire ; et
- 5 ± 2% d'un composé phénolique en tant qu'agent antioxydant.

Conformément à l'invention, le matériau composite peut être uniquement constitué par la composition, c'est-à-dire qu'il ne comprend rien d'autre qu'elle. Dans ce cas, le matériau composite peut notamment être obtenu en mélangeant les différents constituants de la composition, par exemple par extrusion, puis en réduisant le mélange résultant à l'état de particules, par exemple par micronisation.

En variante, le matériau composite peut comprendre de plus un renfort, auquel cas la composition sert à former une matrice dans laquelle se trouve ce renfort. Dans ce cas, le matériau composite peut notamment être obtenu, selon la nature du renfort, par extrusion (auquel cas, on obtient des granulés renforcés), par coextrusion (auquel cas, on obtient des plaques en un thermoplastique renforcé emboutissable) ou encore par imprégnation par voie électrostatique (en utilisant le matériau seul sous forme poudre). Le semi-produit obtenu peut ensuite être transformé en la pièce finale grâce à différentes techniques telles que l'injection, la compression, le moulage et, notamment, le rotomoulage, ou encore l'enroulement filamentaire.

D'une manière générale, pour une transformation par rotomoulage, on utilise, de préférence, un matériau composite dont la viscosité est inférieure à 4000 Pa.s à la température de rotomoulage (soit, par exemple, environ 240°C dans le cas d'un matériau composite à base du polyamide 6 référencé Technyl™ S27 BL de la société SOLVAY, cette viscosité étant déterminée par exemple au moyen d'un rhéomètre rotatif ARES (société RHEOMETRIC SCIENTIFIC) et en utilisant une vitesse de rotation de 1 radian/seconde.

Le renfort présent dans le matériau composite peut être de différents types. Ainsi, il peut notamment s'agir d'un renfort constitué de fibres de quartz, de fibres de carbone, de fibres de graphite, de fibres de silice, de fibres métalliques comme des fibres d'acier, des fibres d'aluminium ou des fibres de bore, de fibres organiques comme des fibres d'aramide, des fibres de polyéthylène, des fibres de polyester ou des fibres de poly(*p*-phénylène benzobisoxazole), plus connues sous le sigle PBO, ou encore de mélanges de ces fibres.

Par ailleurs, le renfort peut se présenter, selon la nature des fibres qui le constituent, sous la forme de fils coupés, de fibres broyées, de mats à filaments continus, de mats à filaments coupés, de stratifils (ou « *rovings* » en anglais), de tissus, de tricots, de feutres, etc, ou encore sous la forme de complexes réalisés par association de différents types de matériaux plans.

L'invention a également pour objet un dispositif de confinement d'un liquide cryogénique, qui comprend au moins une couche en un matériau composite tel que précédemment défini.

Conformément à l'invention, le dispositif de confinement est, de préférence, un dispositif multicouche dont une couche est destinée à être au contact avec le liquide cryogénique, auquel cas cette couche est en un matériau composite qui est uniquement constitué par la composition, c'est-à-dire qui ne comprend rien d'autre qu'elle.

Une telle couche correspond, par exemple, au liner d'un réservoir d'oxygène liquide pour un lanceur spatial.

Avantageusement, le dispositif de confinement comprend en outre au moins une couche en un matériau composite comprenant un renfort.

Une telle couche correspond, par exemple, à une couche destinée à remplir une fonction structurale dans un réservoir d'oxygène liquide pour un lanceur spatial.

De préférence, le dispositif de confinement est un réservoir cryogénique et, notamment, un réservoir d'oxygène liquide, en particulier pour un lanceur spatial.

D'autres caractéristiques et avantages de l'invention apparaîtront mieux à la lecture du complément de description qui suit, qui se rapporte à un exemple de réalisation d'un matériau composite selon l'invention et de démonstration de ses propriétés.

Bien entendu, cet exemple n'est donné qu'à titre d'illustration de l'objet de l'invention et ne constitue en aucun cas une limitation de cet objet.

### EXPOSÉ DÉTAILLÉ DE MODES DE RÉALISATION PARTICULIERS

On prépare un premier matériau composite selon l'invention - ci-après matériau **1** - en mélangeant :
- 80% en masse d'un polyamide 6 (Technyl™ S27 BL - société SOLVAY) ; et
- 20% en masse du graphite synthétique primaire commercialisé par la société TIMCAL sous la référence Timrex™ KS75.

Le mélange est réalisé par extrusion bi-vis (profil de vis L/D = 48), à une température de 240°C et en utilisant une vitesse de vis de 300 tours par minute.

Puis, l'extrudat obtenu est micronisé à froid pour obtenir une poudre dont les particules présentent un diamètre moyen en volume de quelques centaines de microns.

Le matériau **1** ainsi préparé est soumis à des tests visant à apprécier sa compatibilité LOX, sa perméabilité à l'hélium, sa densité, son module de Young en traction à T = 123 K, sa déformation à la rupture en traction à T = 123 K et son coefficient d'expansion thermique à T < Tg.

La compatibilité LOX est déterminée conformément à la norme ASTM D2512 sur des échantillons obtenus par injection du matériau 1 et se présentant sous la forme de disques de 18 ± 0,1 mm de diamètre et de 1,65 ± 0,05 mm d'épaisseur.

La perméabilité à l'hélium est déterminée par un test de perméation à l'hélium que l'on réalise au moyen d'un appareil qui se compose de deux compartiments séparés par un film de matériau 1 de 150 µm d'épaisseur, obtenu par compression d'un disque tel qu'utilisé pour déterminer la compatibilité LOX. La surface du film, qui est soumise au test de perméation, est de 3 cm². Préalablement au test, une désorption sous vide du matériau est effectuée afin de s'assurer que les variations de pression dans le compartiment aval sont plus faibles que celles dues à la diffusion de l'hélium. On applique ensuite une différence de pression (ΔP) de 3 bars entre les deux compartiments et l'augmentation de la pression P dans la chambre aval est enregistrée en fonction du temps, à l'aide d'un capteur de pression (DATAMETRICS). Après une phase transitoire, on obtient un état d'équilibre concernant l'évolution de la pression en fonction du temps dont la pente permet de calculer le coefficient de perméabilité à l'hélium. Le test est réalisé à 20°C.

La densité est déterminée à l'aide d'un pycnomètre à hélium (Accupyc™ 1330 - société MICROMERITICS) en suivant la procédure suivante : séchage d'un échantillon du matériau en étuve à 50°C pendant 12 heures; refroidissement de l'échantillon en dessiccateur; pesée de l'échantillon sec; étalonnage et vérification du pycnomètre selon la notice du fabricant ; mesure de la densité (5 mesures minimum) et relevé de la densité ainsi mesurée.

Le module de Young à la traction et la déformation à la rupture à T = 123 K sont déterminées sur la base des normes ISO 527-1 et ISO 527-2 (relatives aux essais de détermination des propriétés mécaniques des plastiques) et de la norme ISO 1874-2 (relative aux polyamides), en utilisant des éprouvettes type 5A, obtenues par injection du matériau 1 et présentant une épaisseur de 2 mm.

Le coefficient d'expansion thermique à T < Tg est déterminé sur des échantillons obtenus par injection du matériau **1** et se présentant sous la forme de cylindres de 6 mm de diamètre et de 25 mm d'épaisseur, à l'aide d'un analyseur thermomécanique (TMA modèle 2940 - société TA INSTRUMENTS) et en utilisant les paramètres opératoires suivants : montée en température de 5°C/min ; gamme de températures : de -150°C à 130°C ; sous balayage à l'azote ; sonde de 6 mm de diamètre ; charge de 0,1 N et précharge de 0,05 N.

Les résultats des tests sont consignés dans le tableau I ci-après.

**TABLEAU I**

| | |
|---|---|
| **Compatibilité LOX** | 0 |
| (nombre de réactions sur 20 impacts) | |
| **Perméabilité à l'hélium** | 0,45 |
| (Barrer) | |
| **Densité** | 1,23 |
| **Module de Young en traction à T = 123 K** | 4,5 ± 0,2 |
| (GPa) | |
| **Déformation à la rupture en traction à T = 123 K** | 4 ± 1 |
| (%) | |
| **Coefficient d'expansion thermique à T < Tg** | 44.10⁻⁶ |
| (K⁻¹) | |

On prépare un deuxième matériau composite selon l'invention - ci-après matériau **2** - en suivant un protocole opératoire identique à celui décrit ci-avant pour la préparation du matériau **1** à ceci près que l'on mélange 75% en masse du polyamide 6, 20% en masse du graphite synthétique primaire et 5% en masse d'un antioxydant phénolique à empêchement stérique (Irganox™ 1098 - société BASF).

Le matériau **2** est également soumis à un test de compatibilité au LOX mais sur des échantillons obtenus par rotomoulage et se présentant sous la forme de cubes creux de 25 cm de côté et dont les parois mesurent en moyenne 3 mm d'épaisseur. La compatibilité au LOX de ce matériau est identique à celle obtenue pour le matériau **1** (aucune réaction sur 20 impacts).

Ces résultats montrent que le matériau composite selon l'invention présente une compatibilité LOX qui satisfait à la norme ASTM D 2512 (aucune réaction sur 20 impacts) et ce, qu'il contienne ou non un agent antioxydant.

Le matériau composite selon l'invention présente de plus une perméabilité à l'hélium extrêmement faible, ce qui permet de considérer qu'il sera également imperméable ou quasi imperméable à l'oxygène liquide. En effet, il est bien connu que la perméabilité d'un élément à l'hélium est plus élevée que la perméabilité de cet élément à l'oxygène gazeux (puisqu'une molécule d'oxygène, à l'état gazeux, est plus volumineuse qu'une molécule d'hélium), laquelle est en principe, elle-même, est plus élevée que la perméabilité dudit élément à l'oxygène liquide. De plus, il est bien connu que la perméabilité d'un élément aux gaz permanents diminue lorsque la température diminue. La valeur de perméabilité à l'hélium indiquée dans le tableau I ayant été obtenue à 20°C, la perméabilité à l'hélium (et, par voie de conséquence, à l'oxygène liquide) du matériau composite selon l'invention sera donc encore plus faible à une température cryogénique.

Le matériau composite selon l'invention présente en outre des propriétés mécaniques extrêmement satisfaisantes.

Ce matériau représente donc un matériau de choix pour la fabrication de réservoirs d'oxygène liquide, notamment pour des lanceurs spatiaux.

### RÉFÉRENCES CITÉES

[1] Kooij et al., Proceedings of the European Conference on Spacecrafts Structures, Materials and Mechanical Testing, 29 novembre - 1er décembre 2000, Noordwijk, Pays-Bas, pp. 187-192
[2] Baker et al., International Conference on Green Propellant for Space Propulsion, Juin 2001, Noordwijk, Pays-Bas, pp. 327-334
[3] Scatteia et al., Proceedings of the 54th International Astronautical Congress of the International Astronautical Federation, Octobre 2003, Brême, Allemagne, pp. 1630-1642
[4] Scatteia et al., 13th AIAA/CIRA International Space Planes and Hypersonic Systems and Technologies Conference, Mai 2005, Capoue, Italie, pp. 2055-2062
[5] Robinson et al., 42th AIAA/ASME/ASCE/AHS/ASC Structures, Structural Dynamics and Materials Conference and Exhibit, Avril 2001, Seattle, USA, pp. 285-295
[6] « Stabilisation des Plastiques : Principes Généraux », in Techniques de l'Ingénieur, Traité Plastiques et Composites, AM 3 232, pp. 1-14

## Revendications

1. Utilisation d'un matériau composite pour la fabrication d'un dispositif de confinement d'un liquide cryogénique, dans laquelle le matériau composite est obtenu à partir d'une composition comprenant, en pourcentages massiques rapportés à la masse totale de la composition :
- de 60% à 90% d'un polyamide choisi parmi les polyamides 6, 6.6 et 6/6.6 et leurs mélanges ;
- de 10% à 30% d'un graphite synthétique primaire se présentant sous la forme de particules ; et
- de 0% à 10% d'un agent antioxydant.

2. Utilisation selon la revendication 1, dans laquelle le polyamide est un polyamide 6.

3. Utilisation selon la revendication 1 ou la revendication 2, dans laquelle le graphite synthétique primaire présente au moins l'une des caractéristiques suivantes :
(1) 50% en volume des particules du graphite ont une taille au plus égale à 25 µm et 90% en volume des particules du graphite ont une taille au plus égale à 65 µm ;
(2) une surface spécifique (telle que déterminée par la méthode BET) comprise entre 5 et 8 m²/g ; et
(3) une teneur massique en carbone au moins égale à 99,9%.

4. Utilisation selon la revendication 3, dans laquelle le graphite synthétique primaire présente deux et, mieux encore, trois des caractéristiques (1), (2) et (3).

5. Utilisation selon l'une quelconque des revendications 1 à 4, dans laquelle le pourcentage massique de l'agent antioxydant est différent de 0%.

6. Utilisation selon la revendication 5, dans laquelle l'agent antioxydant est un stabilisant thermique, de préférence un composé phénolique.

7. Utilisation selon la revendication 6, dans laquelle le composé phénolique est présent dans la composition à un pourcentage massique de 5 ± 2%.

8. Utilisation selon l'une quelconque des revendications 1 à 7, dans laquelle la composition comprend :
- 75 ± 2% d'un polyamide 6 ;
- 20 ± 2% du graphite synthétique primaire ; et
- 5 ± 2% d'un composé phénolique en tant qu'agent antioxydant.

9. Utilisation selon l'une quelconque des revendications 1 à 8, dans laquelle le matériau composite est uniquement constitué par la composition.

10. Utilisation selon l'une quelconque des revendications 1 à 8, dans laquelle le matériau composite comprend de plus un renfort.

11. Utilisation selon la revendication 10, dans laquelle le renfort est choisi parmi les fibres de quartz, les fibres de carbone, les fibres de graphite, les fibres de silice, les fibres métalliques, les fibres d'aramide, les fibres de polyéthylène, les fibres de polyester, les fibres de poly(*p*-phénylène benzobisoxazole), et leurs mélanges.

12. Dispositif de confinement d'un liquide cryogénique, qui comprend au moins une couche en un matériau composite tel que défini dans l'une quelconque des revendications 1 à 11.

13. Dispositif de confinement selon la revendication 12, qui est un dispositif multicouche dont une couche est destinée à être au contact avec le liquide cryogénique et dans lequel la couche qui est destinée à être en contact avec le liquide cryogénique est en un matériau composite tel que défini dans la revendication 9.

14. Dispositif de confinement selon la revendication 13, qui comprend en outre au moins une couche en un matériau composite tel que défini dans la revendication 10.

15. Dispositif de confinement selon l'une quelconque des revendications 12 à 14, qui est un réservoir cryogénique.

16. Dispositif selon la revendication 15, qui est un réservoir d'oxygène liquide, en particulier pour un lanceur spatial.

## Patentansprüche

1. Verwendung eines Verbundmaterials zur Herstellung einer Vorrichtung zum Aufnehmen einer Kryogen-Flüssigkeit, wobei das Verbundmaterial ausgehend von einer Zusammensetzung erhalten wird, welche in Masseprozenten bezogen auf die Gesamtmasse der Zusammensetzung umfasst:
- zwischen 60% und 90% eines Polyamids ausgewählt aus den Polyamiden 6, 6.6 und 6/6.6 und ihren Mischungen;
- zwischen 10% und 30% eines primären synthetischen Graphits, welches in Partikelform vorliegt; und
- zwischen 0% und 10% eines Antioxidans.

2. Verwendung nach Anspruch 1, wobei das Polyamid ein Polyamid 6 ist.

3. Verwendung nach Anspruch 1 oder Anspruch 2, wobei das primäre synthetische Graphit wenigstens eine der folgenden Eigenschaften aufweist:
(1) 50 Volumen-% der Partikel des Graphits haben eine Größe von höchstens gleich 25 µm und 90 Volumen-% der Partikel des Graphits haben eine Größe von höchstens gleich 65 µm;
(2) eine spezifische Oberfläche (bestimmt nach dem BET-Verfahren) zwischen 5 und 8 m²/g; und
(3) einen Massenanteil von Kohlenstoff von wenigstens gleich 99,9%.

4. Verwendung nach Anspruch 3, wobei das primäre synthetische Graphit zwei, vorzugweise drei der Eigenschaften (1), (2) und (3) aufweist.

5. Verwendung nach einem der Ansprüche 1 bis 4, wobei der Massenanteil des Antioxidans von 0% verschieden ist.

6. Verwendung nach Anspruch 5, wobei das Antioxidans ein Wärme-Stabilisator ist, vorzugsweise eine Phenol-Verbindung.

7. Verwendung nach Anspruch 6, wobei die Phenol-Verbindung in der Zusammensetzung mit einem Massenanteil von 5 ± 2 % vorliegt.

8. Verwendung nach einem der Ansprüche 1 bis 7, wobei die Zusammensetzung umfasst:
- 75 ± 2 % eines Polyamid 6;
- 20 ± 2 % des primären synthetischen Graphits; und
- 5 ± 2 % einer Phenol-Verbindung als Antioxidans.

9. Verwendung nach einem der Ansprüche 1 bis 8, wobei das Verbundmaterial ausschließlich aus der Zusammensetzung gebildet ist.

10. Verwendung nach einem der Ansprüche 1 bis 8, wobei das Verbundmaterial zusätzlich eine Verstärkung umfasst.

11. Verwendung nach Anspruch 10, wobei die Verstärkung aus Quarz-Fasern, Kohlenstoff-Fasern, Graphit-Fasern, Silika-Fasern, Metall-Fasern, AramidFasern, Polyethylen-Fasern, Polyester-Fasern, Poly(p-phenylenbenzobisoxaziol)-Fasern und ihren Mischungen ausgewählt ist.

12. Vorrichtung zum Aufnehmen einer Kryogen-Flüssigkeit, welche wenigstens eine Schicht aus einem Verbundmaterial umfasst, welches in einem der Ansprüche 1 bis 11 definiert ist.

13. Vorrichtung zum Aufnehmen nach Anspruch 12, welche eine mehrschichtige Vorrichtung ist, wobei eine Schicht dazu vorgesehen ist, in Kontakt mit der Kryogen-Flüssigkeit zu sein, und wobei die Schicht, welche dazu vorgesehen ist, in Kontakt mit der Kryogen-Flüssigkeit zu sein, aus einem Verbundmaterial ist, welches in Anspruch 9 definiert ist.

14. Vorrichtung zum Aufnehmen nach Anspruch 13, welche ferner wenigstens eine Schicht aus einem Verbundmaterial umfasst, welches in Anspruch 10 definiert ist.

15. Vorrichtung zum Aufnehmen nach einem der Ansprüche 12 bis 14, welche ein Kryogen-Behälter ist.

16. Vorrichtung nach Anspruch 15, welche ein Behälter für flüssigen Sauerstoff ist, insbesondere für eine Weltraumrakete.

## Claims

1. Use of a composite material for manufacturing a device for containment of a cryogenic liquid, in which the composite material is obtained from a composition comprising, in percentages by weight relative to the total weight of the composition:
- from 60% to 90% of a polyamide chosen from polyamides 6, 6.6 and 6/6.6 and mixtures thereof;
- from 10% to 30% of a primary synthetic graphite in the form of particles; and
- from 0% to 10% of an anti-oxidant.

2. Use according to claim 1, in which the polyamide is a polyamide 6.

3. Use according to claim 1 or claim 2, in which the primary synthetic graphite has at least one of the following characteristics:
(1) 50% by volume of the graphite particles have a size equal to at most 25 µm and 90% by volume of the graphite particles have a size equal to at most 65 µm;
(2) a specific area (as determined by the BET method) between 5 and 8 m²/g; and
(3) a carbon content by weight equal to at least 99.9%.

4. Use according to claim 3, in which the primary synthetic graphite has two and even better three of characteristics (1), (2) and (3).

5. Use according to any one of claims 1 to 4, in which the percentage by weight of the anti-oxidant is different from 0%.

6. Use according to claim 5, in which the anti-oxidant is a thermal stabiliser, preferably a phenolic compound.

7. Use according to claim 6, in which the phenolic compound is present in the composition with a percentage by weight of 5 ± 2%.

8. Use according to any one of claims 1 to 7, in which the composition comprises:
- 75 ± 2% of a polyamide 6;
- 20 ± 2% of the primary synthetic graphite; and
- 5 ± 2% of a phenolic compound as an anti-oxidant.

9. Use according to any one of claims 1 to 8, in which the composite material consists of the composition alone.

10. Use according to any one of claims 1 to 8, in which the composite material further comprises a reinforcement.

11. Use according to claim 10, in which the reinforcement is chosen from quartz fibers, carbon fibers, graphite fibers, silica fibers, metal fibers, aramide fibers, polyethylene fibers, polyester fibers, poly(*p*-phenylene benzobisoxazole) fibers, and mixtures thereof.

12. Device for containment of a cryogenic liquid that comprises at least one layer made of a composite material as defined in any one of claims 1 to 11.

13. Device for containment according to claim 12, which is a multilayer device in which one layer is to be in contact with the cryogenic liquid and in which the layer that is to be in contact with the cryogenic liquid is made of a composite material as defined in claim 9.

14. Device for containment according to claim 13, which further comprises at least one layer made of a composite material as defined in claim 10.

15. Device for containment according to any one of claims 12 to 14, which is a cryogenic tank.

16. Device according to claim 15, which is a liquid oxygen tank, particularly for a space launcher.
